# EUROPÄISCHE PATENTANMELDUNG

(11) **EP 1 746 014 A1**
(43) Veröffentlichungstag der Anmeldung: **24.01.2007**
(21) Anmeldenummer: 06114201.4
(22) Anmeldetag: 19.05.2006
(51) Int. Cl.: B62D 5/06

(54) **Kühlvorrichtung für einen Druckmittelkreislauf eines Fahrzeuges**

(30) Priorität: 23.07.2005 DE 102005034566
(71) Anmelder: ZF-Lenksysteme GmbH, 73527 Schwäbisch Gmünd (DE)
(72) Erfinder: Kogler, Walter, 73453 Abtsgmünd (DE); Funk, Stefan, 73574 Iggingen-Schönhardt (DE)

(57) **Zusammenfassung**

Kühlvorrichtung (1) für einen Druckmittelkreislauf eines Fahrzeugs, insbesondere eines Kraftfahrzeugs, mit einem Verdichter, der Druckmittel (2) einem Verbraucher (3) des Druckmittelkreislaufs zuführt und mit einem Wärmetauscher (4) der von dem Druckmittel (2) zur Kühlung des Druckmittels (2) durchströmt ist. Dem Wärmetauscher (4) wird Kühlflüssigkeit (5) zugeführt.

Um eine Kühlvorrichtung, die einen sicheren Betrieb eines Druckmittelkreislaufs eines Fahrzeugs ermöglicht und einfach aufgebaut ist, darzustellen, ist vorgesehen, dass ein Gehäuse (6) des Wärmetauschers (4) so an dem Verbraucher (3) festgelegt ist, dass eine fluidische Verbindung (7) für das Druckmittel (2) des Verbrauchers (3) mit dem Wärmetauscher (4) ohne Rohr- oder Schlauchleitungen dargestellt ist.

## Beschreibung

Technisches Gebiet
Die Erfindung betrifft eine Kühlvorrichtung für einen Druckmittelkreislauf eines Fahrzeuges, insbesondere eines Kraftfahrzeugs, nach dem Oberbegriff des Anspruchs 1.
Stand der Technik

Die DE 40 40 378 C3 beschreibt eine Kühleinrichtung für einen Flüssigkeitskreislauf einer Servolenkung eines Kraftfahrzeugs in dem ein Flüssigkeitsbehälter, eine Lenkhilfepumpe als Verdichter und ein hydraulischer Verbraucher angeordnet sind. Das Lenkgetriebe ist von der Flüssigkeit des Flüssigkeitskreislaufes unterstützt. Ein Kühlelement ist in einer Rücklaufleitung zwischen dem Verbraucher und dem Flüssigkeitsbehälter angeordnet. Das Kühlelement ist vom Fahrtwind gekühlt und stützt sich an der Karosserie des Kraftfahrzeugs ab. Das Kühlelement ist als Kühlschleife, die an einem Achsträger in Querrichtung des Kraftfahrzeugs verläuft, gebildet. Das Kühlelement wird vom Fahrtwind an der Fahrzeugunterseite angeströmt.

Durch die aktuelle, zunehmende Kapselung der Motoren von Kraftfahrzeugen und insbesondere bei intermittierendem Betrieb solcher Kraftfahrzeuge kann die Kühlwirkung solcher Kühleinrichtungen nicht ausreichend sein.

Die DE 699 13 572 T2 beschreibt einen Flüssigkeitsbehälter mit einer Kühleinheit für eine Servolenkung, umfassend ein Gehäuse mit einem Behälter zum Aufnehmen und Sammeln von Hydraulikfluid eines Servolenkungsgetriebes und zum Bereithalten des Hydraulikfluids für die Zuleitung zu einer Hydraulikpumpe. Das Gehäuse weist einen Wärmetauscher auf, durch den ein Kühlflüssigkeitsströmungsweg zum Wärmetausch mit dem Hydraulikfluid verläuft.

Die Kühleinheit ist zwar aufgrund des Prinzips der Flüssigkeitskühlung fahrtwindunabhängig, weist aber aufgrund der vielen Schlauchleitungen und/oder Rohrleitungen für das Hydraulikfluid und für die Kühlflüssigkeit einen größeren Bauraumbedarf auf und ist komplex zu montieren.

### Darstellung der Erfindung

### Technische Aufgabe

Der Erfindung liegt die Aufgabe zugrunde, eine einfach bauende Kühlvorrichtung, die einen sicheren Betrieb eines Druckmittelkreislaufes eines Fahrzeugs ermöglicht, darzustellen.

Die Aufgabe wird mit einer Kühlvorrichtung mit den Merkmalen des Anspruchs 1 gelöst.

### Technische Lösung

Dadurch, dass ein Gehäuse des Wärmetauschers so an dem Verbraucher festgelegt ist, dass eine fluidische Verbindung für das Druckmittel des Verbrauchers mit dem Wärmetauscher ohne Rohr- oder Schlauchleitungen ermöglicht ist und die fluidische Verbindung durch Kanäle und Flansche des Gehäuses und/oder des Verbrauchers zwischen dem Verbraucher und dem Wärmetauscher geschaffen ist, ist eine direkte funktionelle Verknüpfung des Verbrauchers und des Wärmetauschers geschaffen, die ohne Rohr- und/oder Schlauchleitungen darstellbar ist und einfach aufgebaut ist.

Bevorzugte Ausführungen ergeben sich aus den Unteransprüchen.

Der Wärmetauscher ist bevorzugt ausschließlich an dem Verbraucher festgelegt wie etwa mit Schraubbolzen lösbar an einem Flansch flächig mit dem Verbraucher verbunden. Durch diese konstruktive Maßnahme kann zum einen der Bauraum der Einheit aus Wärmetauscher und Verbraucher minimiert werden und zum anderen lässt sich dadurch eine zusätzliche Wärmeleitung vom Verbraucher zu dem Wärmetauscher erreichen, vorausgesetzt, die Art der Dichtung zwischen Verbraucher und dem Wärmetauscher erlaubt dies.

Die Kühlflüssigkeit für den Wärmetauscher der Kühlvorrichtung kann von einem separaten Kühlkreislauf für den Verbraucher stammen. Es ist jedoch zweckmäßig, die Kühlflüssigkeit für den Wärmetauscher bei Einbau in ein Kraftfahrzeug einem Kühlkreislauf eines Verbrennungsmotors des Kraftfahrzeugs zu entnehmen. Die Kühlvorrichtung eignet sich insbesondere zur Kühlung von Hydrauliköl einer Servolenkung und ist bevorzugt auf einem als Lenkgetriebe gebildeten Verbraucher platzsparend und leicht tauschbar anzuordnen. Die Servolenkung kann eine beliebig gestaltete hydraulische oder elektrohydraulische Hilfskraft- oder Fremdkraftlenkung sein. Die Kühlvorrichtung kann dabei auf einem Lenkgetriebe in der Art einer Kugelmutter-Hydrolenkung festgelegt sein.

Im eingebauten Zustand des Wärmetauschers in einem Kraftfahrzeug kann dieser auch einer Fahrbahn des Kraftfahrzeugs zugewandt angeordnet sein, um zusätzlich Kühlluft an den Wärmetauscher zu leiten.

Es können auch mehrere Wärmetauscher an einem Verbraucher direkt festgelegt sein. Um den Zulauf und Ablauf von Kühlflüssigkeit und den Ablauf von Druckmittel an dem Wärmetauscher einfach auszuführen ist es zweckmäßig, den Kühlflüssigkeitseintritt und den Kühlflüssigkeitsaustritt und den Druckmittelaustritt bevorzugt als Stutzen für eine Schlauch- oder Rohrleitung auf einer einzigen Seite des Wärmetauschers anzuordnen. Dadurch ergeben sich einfache Montageverhältnisse etwa beim Einbau der Kühlvorrichtung zusammen mit dem Verbraucher in einem Fahrzeug.

### Vorteilhafte Wirkungen

Kurze Beschreibung der Zeichnungen

Die Erfindung wird nun näher anhand eines Ausführungsbeispiels beschrieben und anhand der beiliegenden Zeichnung wiedergegeben.

Fig. 1 zeigt eine perspektivische Ansicht einer Kühlvorrichtung an einem Lenkgetriebe einer Kugelmutter-Hydrolenkung,
Fig. 2 zeigt eine perspektivische Ansicht der Kühlvorrichtung in Fig. 1.

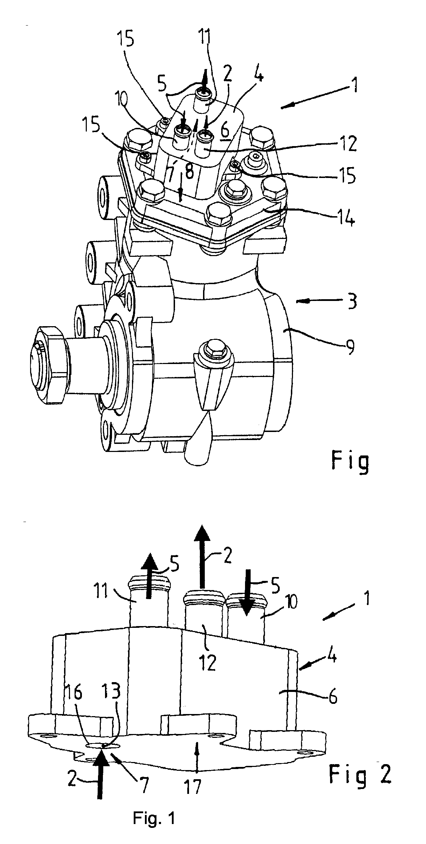

In Fig. 1 ist in einer perspektivischen Ansicht eine Kühlvorrichtung 1 zur Kühlung von Druckmittel, wie Hydrauliköl, welches einen Verbraucher 3 verläßt , gezeigt. Der Verbraucher 3 ist in dem gezeigten Ausführungsbeispiel ein Lenkgetriebe 9 einer Kugelmutter-Hydrolenkung eines Nutzkraftwagens. Ein Wärmetauscher 4 ist zur Kühlung des Druckmittels 2, welches aus dem Lenkgetriebe 9 in einen Druckmitteleintritt 13 des Wärmetauschers 4 eintritt, direkt an einer Flanschfläche 8 an einem Getriebedeckel 14 des Lenkgetriebes 9 über Schraubbolzen 15 festgelegt. Der Wärmetauscher 4 weist ein einstückig gebildetes Gehäuse 6 aus gut wärmeleitendem Material auf, das von einer Vielzahl von Kanälen für die Kühlflüssigkeit 5 und das Druckmittel 2 durchzogen ist.

Bezugszeichenliste
1 Kühlvorrichtung 10 Kühlflüssigkeitseintritt
2 Druckmittel 11 Kühlflüssigkeitsaustritt
3 Verbraucher 12 Druckmittelaustritt
4 Wärmetauscher 13 Druckmitteleintritt
5 Kühlflüssigkeit 14 Getriebedeckel
6 Gehäuse 15 Schraubbolzen
7 Verbindung, fluidisch 16 Bohrung
8 Flanschfläche 17 Flanschfläche
9 Lenkgetriebe

### Weg(e) zur Ausführung der Erfindung

Die Kühlflüssigkeit 5 zur Aufnahme von Wärme aus dem Druckmittel 2 wird einem Kühlmitteltank eines Kühlkreislaufs für einen Verbrennungsmotor des Kraftfahrzeugs oder Nutzkraftwagens entnommen und über eine nicht gezeigte Pumpe einem stutzenartigen Kühlflüssigkeitseintritt 10 an der, der Flanschfläche 8 gegenüberliegenden Seite des Wärmetauschers 4 zugeführt. Auf derselben Seite des Wärmetauschers 4 befinden sich je ein Kühlflüssigkeitsaustritt 11 zur Abfuhr erwärmter Kühlflüssigkeit aus dem Wärmetauscher 4 und ein Druckmittelaustritt 12 zum Austritt von abgekühltem Druckmittel 2 aus dem Wärmetauscher 4 und zur Weiterleitung des Druckmittels 2 in einen Druckmittelbehälter. Wie Fig. 2 in einer perspektivischen Ansicht von schräg unten auf den Wärmetauscher 4 in Fig. 1 zeigt, ist die fluidische Verbindung 7 für die Druckmittelüberleitung von dem Verbraucher 3 zu dem Wärmetauscher 4 ausschließlich durch eine Bohrung 16 in einer Flanschfläche 17 des Wärmetauschers 4, die auf der Flanschfläche 8 des Verbrauchers 3 zu liegen kommt, gebildet. Es ergibt sich eine Kühlvorrichtung 1, die einen geringen Bauraum beansprucht und die einfach zu montieren ist und ohne aufwendig zu montierende Rohr- oder Schlauchleitungen zwischen dem Verbraucher 3 und dem Wärmetauscher 4 auskommt.

## Patentansprüche

1. Kühlvorrichtung für einen Druckmittelkreislauf eines Fahrzeugs, insbesondere eines Kraftfahrzeugs, mit einem Verdichter der Druckmittel (2) einem Verbraucher (3) des Druckmittelkreislaufs zuführt und mit einem Wärmetauscher (4) der von dem Druckmittel (2) zu dessen Kühlung durchströmt ist, wobei dem Wärmetauscher (4) Kühlflüssigkeit (5) zugeführt ist,
**dadurch gekennzeichnet, dass** ein Gehäuse (6) des
Wärmetauschers (4) so an dem Verbraucher (3) festgelegt ist, dass eine fluidische Verbindung (7) für das Druckmittel (2) des Verbrauchers (3) mit dem Wärmetauscher (4) ohne Rohr- oder Schlauchleitung dargestellt ist.

2. Kühlvorrichtung nach Anspruch 1, **dadurch gekennzeichnet, dass** der Wärmetauscher (4) ausschließlich an dem Verbraucher (3) festgelegt ist.

3. Kühlvorrichtung nach einem der Ansprüche 1 oder 2, **dadurch gekennzeichnet, dass** das Gehäuse (6) des Wärmetauschers (4) an einer Flanschfläche (8) des Verbrauchers (3) festgelegt ist.

4. Kühlvorrichtung nach Anspruch 3, **dadurch gekennzeichnet, dass** das Gehäuse (6) des Wärmetauschers (4) wärmeleitend an dem Verbraucher (3) festgelegt ist.

5. Kühlvorrichtung nach einem der Ansprüche 1 bis 4, **dadurch gekennzeichnet, dass** die Kühlflüssigkeit (5) aus einem Kühlflüssigkeitskreislauf eines Verbrennungsmotors eines Kraftfahrzeugs entnommen ist.

6. Kühlvorrichtung nach einem der Ansprüche 1 bis 5, **dadurch gekennzeichnet, dass** der Verbraucher (3) ein Lenkgetriebe (9) einer Servolenkung ist.

7. Kühlvorrichtung nach Anspruch 6, **dadurch gekennzeichnet, dass** das Lenkgetriebe (9) Teil einer Hilfskraft- oder Fremdkraftlenkung ist.

8. Kühlvorrichtung nach einem der Ansprüche 1 bis 7, **dadurch gekennzeichnet, dass** das Lenkgetriebe (9) Teil einer Kugelmutter-Hydrolenkung ist.

9. Kühlvorrichtung nach einem der Ansprüche 1 bis 8, **dadurch gekennzeichnet, dass** der Wärmetauscher (4) in einem eingebauten Zustand in einem Kraftfahrzeug einer Fahrbahn des Kraftfahrzeugs zugewandt ist.

10. Kühlvorrichtung nach einem der Ansprüche 1 bis 9, **dadurch gekennzeichnet, dass** mehrere Wärmetauscher (4) an dem Verbraucher festgelegt sind.

11. Kühlvorrichtung nach einem der Ansprüche 1 bis 10, **dadurch gekennzeichnet, dass** der Kühlflüssigkeitseintritt (10) und der Kühlflüssigkeitsaustritt (11) und der Druckmittelaustritt (12) an einer Seite des Wärmetauschers (4) angeordnet ist.
